# EUROPEAN PATENT APPLICATION

(11) **EP 1 557 705 A1**
(43) Date of publication of application: **27.07.2005**
(21) Application number: 04425695.6
(22) Date of filing: 20.09.2004
(51) Int. Cl.: G02B 6/44

(54) **Optical fibre connection box for aerial cables**

(30) Priority: 26.01.2004 IT RM20040031
(71) Applicant: C.I.S. Sud s.r.l., 00040 Ariccia (Roma) (IT)
(72) Inventor: Bernardini, Giuseppe, 00040 Ariccia, Roma (IT)
(74) Representative: Iannone, Carlo Luigi

(57) **Abstract**

The invention relates to an aerial optical fibres joint container, particularly on electric phase conductors, which comprises a case, in which at least one optical fibre joining element is contained, and provided with inlet openings for the wire pieces to be joined and with wet seal means, wherein said case has a shape without corners or with round corners.

The web seal means comprise gaskets and/or sealing thermo-shrinkable sheaths.

## Description

The present invention regards an optical fibre joint container, particularly on phase electric conductors.

As it is known, it is possible to realise optical fibre networks exploiting the aerial lines of the previously existent electric power transportation network. This solution, which is particularly profitable for electric power transportation companies wishing to develop their own optical fibre network, provides for using, as optical fibres physical carrier, the power line ground wires.

In fact, all medium tension and high tension electric lines are provided with a wire, identified as ground wire, which is a ground conductor wire linking together the single pylons, in order to improve the grounding of the aerial line system, and which is positioned in such a way as to overlook the group of three phase conductor wires and to form a shield against possible electrical discharges, due to atmospheric fulminations.

The ground wire is made of metallic strands twisted together. Inside the ground wire, working as the core of the metallic strands which form it, it is possible to position a tube, metallic itself, containing the optical fibres, in bundle.

The factory length wires, the so called pieces, once they are tightened on the power line, are joined together, as far as the optical fibres are concerned, on the pylon, where they are moored.

The optical fibres junction is realised in a case, called joint container, which is placed and fixed, at a certain height, on the pylon.

Some power lines, especially medium tension lines, are not provided with a ground wire. In such cases, it is possible to use, with specific provisions, as a physical carrier of the optical fibres cable, a phase conductor wire.

As in the case of ground wire, even when a phase conductor wire is used as the optical fibres physical carrier, inside its body, acting as the core of the strands constituting the wire, a metallic tube can be placed, containing the optical fibres, in bundle.

In such a case, however, the joining of the different pieces, and consequently of the fibres, is realised directly on the span, close to the pylon, in order to simplify the installation, considering that the wire is under tension. In order to realise the junction, a closed path (loop) with two parallel branches is realised on the line, one of the branches assuring the electric continuity, while the other is used for joining the cables. In particular, it is realised an electric bridge by rolling up the phase conductor wire in order to form a loop, the junction of the optical fibres of the two wire pieces and the interruption of the electric line being realised on the eyelet. Consequently, the eyelet is electrically insulated, the electric current passing on the phase conductor wire portions which touch each other at the beginning and the end of the eyelet.

This solution, due to the fact that the phase conductor wires can not be brought down to the soil, but must stay at a height form the soil which is determined by design parameters as a function of the electric tension passing through, has the drawback of a possible modification of the phase conductor wire characteristics in the joining area. In fact, even if, in order to realise the junction, a loop with two parallel branches is realised on the line, the fibres joining being realised on the electrically insulated branch, it is a good principle to realise the joining so that it can not interfere with the electric insulation of the branch on which it is located.

It is an aim of the present invention to realise a joint for optical fibres and phase conductor wire pieces, used as the physical carriers of the optical fibres, which satisfies the joining technology according to the state of the art and which does not modify, from an electrical point of view, the phase conductor in the joining area.

It is therefore a specific object of the present invention an optical fibres joint container, particularly on electric phase conductors, which comprises a case, in which at least one optical fibre joining element is contained, and provided with inlet openings for the wire pieces to be joined and with wet seal means, wherein said case has a shape without corners or with round corners.

In particular, according to the present invention, said inlet openings for the wire pieces to be joined are located on opposed ends of said case, said case having preferably a cylindrical shape, tapered at its ends, nearby said inlet openings for the wire pieces to be joined, and being comprised of two coupled portions, which can be de-coupled in order to approach the internal area of said container.

According to the present invention, said wet seal means comprise gaskets and/or sealing thermo-shrinkable sheaths.

Besides, also according to the invention, said at least one optical fibre joining element is placed on a support base, inside said case.

Further, the optical fibres joint container according to the present invention comprises clamping means for the phase conductor wire pieces, preferably comprising a mooring, integral with said support base.

Further, it is a second specific object of the present invention a method of joining optical fibres, particularly optical fibres on electric phase conductor wires, by a joint container of the previously defined kind, provided with a case, inside which at least a joining element is located, comprising the following steps:
- cutting the strands constituting the electric phase conductor wire, releasing a defined length of the internally contained optical fibre containing tube,
- cutting a part of said containing tube length previously released, thus uncovering said optical fibres,
- covering a part of said fibres containing tube and a part of said strands with a thermo-shrinkable sheath and heating so that the sheath adheres to the respective external surfaces,
- introducing the ends of the two wire pieces to be joined through the openings of said case, blocking them by means of clamping means,
- placing the optical fibres on said joining elements,
- seal closing said joint container,
- covering with a thermo-shrinkable sheath the space between the surface of both phase conductor wire pieces and that of the sleeves through which these wire pieces are passed, and heating said thermo-shrinkable sheaths.
   The present invention will now be described, for illustrative but not limitative purposes, according to one preferred embodiment thereof, with a particular reference to the enclosed drawing figures, wherein
- figure 1 shows a schematic view of an electric line and of an optical fibre joint container according to the present invention,
- figure 2 shows a lateral view of an optical fibre joint container according to the present invention,
- figure 3 shows a lateral view of the optical fibre joint container shown in figure 2, on which the sealing sheaths are applied,
- figure 3A shows a cross section view of the detail A of figure 3,
- figure 4 shows a view of a phase conductor wire piece end as prepared for joining,
- figure 5 shows a view of the phase conductor wire piece of figure 4, on which a thermo-shrinkable sheath is applied,
- figure 6 shows a side view of an optical fibre joint container according to the present invention, without any case, and
- figure 7 shows a top plan view, partially sectioned, of an optical fibre joint container according to the present invention.

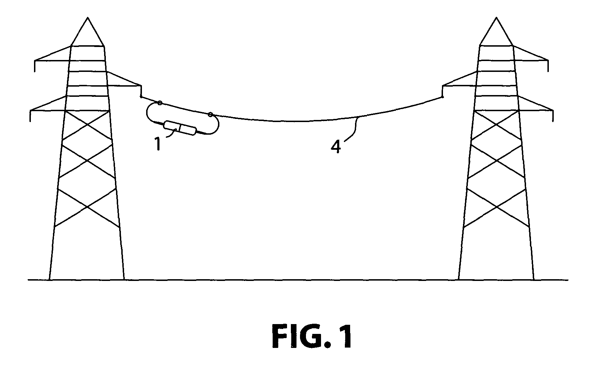

Referring to figures, and preliminary with reference in particular to figure 1, it is shown a joint container 1, placed by the span of a phase conductor wire 4. It is shown that the conductor wire is disposed so to form a loop with two parallel branches, the branch on which the joint container is located being electrically insulated.

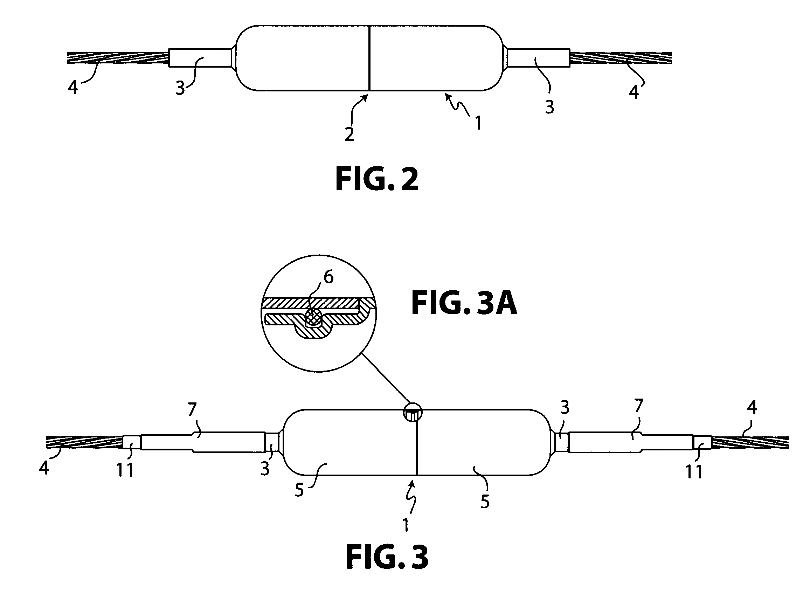

Figure 2 shows in particular the joint container 1, comprising a case 2, having walls which are smooth on the entire surface and having a rounded shape in general, without any corner that would constitute, consequently to the so called points effect, a breakdown point for the transmitted currents.

The case 2 has a cylindrical shape and a diameter big enough to internally host the optical fibre joining devices. The ends of the case 2 are tapered with drawing to form two sleeves 3, for the introduction of both phase conductor wire pieces, inside which the optical fibres to be joined are located. The sleeves 3 have a diameter slightly bigger than the diameter of the phase conductor wire 4.

Figure 3 shows how the case 2 of the joint container 1 is made of two cylindrical symmetrical half-shells 5, tapered at one end in order to form the sleeves 3 and which are coupled together at the other end, where one of the half-shells 5 is provided with a recessed region in order to allow the clutch coupling with the other half-shell 5. Making reference to figure 3A, the wet sealing, in the coupling area between the two half-shells 5, is granted by a seal gasket 6, in particular by an O-ring 6, placed in a suitable groove.

Part of each sleeves 3 and the portion adjacent thereto of a phase conductor wire 4 is covered by a thermo-shrinkable sheath 7, whose function is to stop moisture that would have entered into the joint container passing through the gap comprised between the phase electric conductor wire 4 surface and the sleeve 3 internal surface.

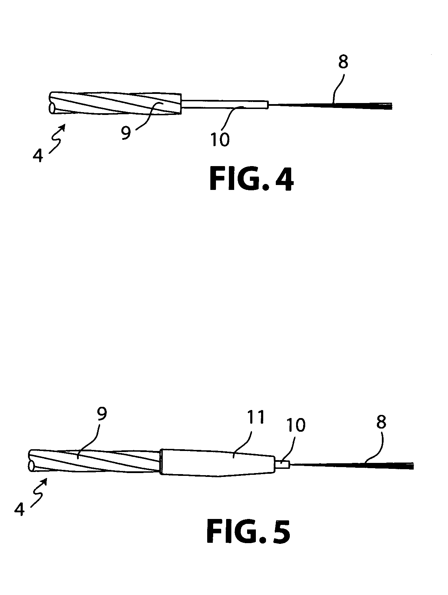

With reference to figure 4, optical fibres 8 come out from the ends of the phase conductor wires 4, for a length varying according to the needs due to the joining and taken account that it is also necessary to provide for an extra-length in order to allow future further joining operations. Optical fibres 8 are uncovered having previously cut the necessary length of the strands 9, which constitute the phase conductor wire 4, and of the tube 10, containing the fibres. In particular, the strands 9 are cut for a length a little bigger than that of the cut of the tube 10, which contains the optical fibres 8, and which thus comes out from the phase conductor wire 4 for a certain length.

In figure 5, a portion of the phase conductor wire 4 and of the tube 10, which contains the optical fibres 8, is covered with a thermo-shrinkable sheath 11 with the function of stopping the moisture passing through the strands. In fact, even if the seal on the strands is not optimal, as a consequence of the little adherence of the sheath on the strands and of the room comprised between the strands, the passage of moisture is stopped at the level of the zone where the sheath adheres to the smooth surface of the containing tube 10.

With reference to figure 3, the length of the thermo-shrinkable sheath 11 has to be such to be covered for a little portion by the thermo-shrinkable sheath 7, during the closure of the joint. In this way, a perfect wet seal is realised, since the thermo-shrinkable sheath avoids the passage of the moisture in the space comprised between the surface of the phase conductor wire 4 and the internal surface of the sleeve 3, while the thermo-shrinkable sheath 7 stops the moisture passing through the strands before it can enter in contact with the optical fibres.

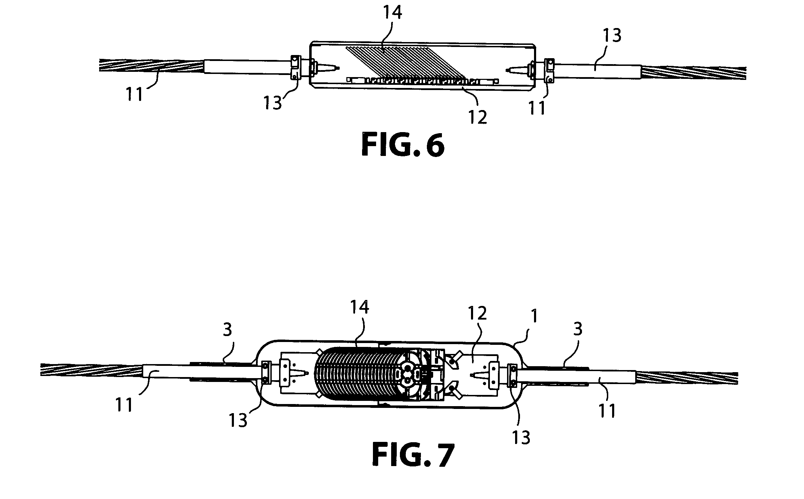

With reference to figure 6, the internal area of the joint container comprises a support base 12, realised by means of a flat plate with turned-up ends, on each of which being provided a mooring 13 for the phase conductor wires 4 and where fibre junction modules 14 are placed, realised according to one of the solution already known from prior art.

Figure 7 shows the main components of the optical fibres joint container 1, according to the present invention.

In particular, in order to realise the junction ot the optical fibres 8, these are revealed by cutting the tube 10 and, for a longer length, the strands 9 of the two phase conductor wire pieces 4 to join. A portion of the uncovered tube 10 and strands 9 is covered with a thermo-shrinkable sheath 11 and the whole is passed in the sleeves 3 and secured to the support base 12 for the junction modules 14, by means of moorings 13.

Keeping the two half-shells 5, which constitute the container 2 of the joint 1, detached, optical fibres 8 are placed on the junction modules 14. Then, the container 2 is closed coupling the two half-shells 5 and sealing them, by means of the thermo-shrinkable sheath 7, the space between the surfaces of the two phase conductor wire pieces 4 and that of the two sleeves through which they are passed.

The present invention has been described for illustrative but non limitative purposes, according to its favourite embodiments, but it is to be understood that variation and/or modifications can be introduced by the skilled in the art without for this departing from the related scope of protection, as defined by the enclosed claims.

## Claims

1. Optical fibres joint container, particularly on electric phase conductors, which comprises a case, in which at least one optical fibre joining element is contained, and provided with inlet openings for the wire pieces to be joined and with wet seal means, **characterised in that** said case has a shape without corners or with round corners.

2. Optical fibres joint container according to claim 1, **characterised in that** said inlet openings for the wire pieces to be joined are located on opposed ends of said case.

3. Optical fibres joint container according to claim 1 or 2, **characterised in that** said case has a cylindrical shape, tapered at its ends, nearby said inlet openings for the wire pieces to be joined.

4. Optical fibres joint container according to any of the previous claims, **characterised in that** said case is comprised of two coupled portions, which can be de-coupled in order to approach the internal area of said container.

5. Optical fibres joint container according to any of the previous claims, **characterised in that** said wet seal means comprise gaskets and/or sealing thermo-shrinkable sheaths.

6. Optical fibres joint container according to any of the previous claims, **characterised in that** said at least one optical fibre joining element is placed on a support base, inside said case.

7. Optical fibres joint container according to any of the previous claims, **characterised in that** it comprises clamping means for the phase conductor wire pieces.

8. Optical fibres joint container according to claim 7, **characterised in that** said clamping means for the phase conductor wire pieces comprise a mooring, integral with said support base.

9. Method of joining optical fibres, particularly optical fibres on electric phase conductor wires, by a joint container of the kind defined in previous claims 1-8, provided with a case, inside which at least a joining element is located, **characterised in that** it comprises the following steps:
- cutting the strands constituting the electric phase conductor wire, releasing a defined length of the internally contained optical fibre containing tube,
- cutting a part of said containing tube length previously released, thus uncovering said optical fibres,
- covering a part of said fibres containing tube and a part of said strands with a thermo-shrinkable sheath and heating so that the sheath adheres to the respective external surfaces,
- introducing the ends of the two wire pieces to be joined through the openings of said case, blocking them by means of clamping means,
- placing and/or joining the optical fibres on said joining elements,
- seal closing said joint container,
- covering with a thermo-shrinkable sheath the space between the surface of both phase conductor wire pieces and that of the sleeves through which these wire pieces are passed, and heating said thermo-shrinkable sheaths.
